# EUROPEAN PATENT APPLICATION

(11) **EP 2 624 129 A1**
(43) Date of publication of application: **07.08.2013**
(21) Application number: 13153701.1
(22) Date of filing: 01.02.2013
(51) Int. Cl.: G06F 9/44

(54) **Integrated development environment and method**

(30) Priority: 03.02.2012 GB 201201929; 20.02.2012 US 201213400451
(71) Applicant: Microgen Aptitude Limited, Barley Way, Fleet Hampshire GU51 2QJ (GB)
(72) Inventor: Thomson, Neil, Inverness, Highland IV63 6TJ (GB); Pusz, Grzegorz, 51-506 Wroclaw (PL)
(74) Representative: Asquith, Julian Peter

(57) **Abstract**

A method of creating a software application using an integrated development environment, IDE, running on a computing device (30) having at least a processor (34), a memory (36), a display device (32) and an input device (38), comprises:
retrieving from said memory (36) and providing on said display device (32) a number of graphical elements each representing at least one operation to be performed on data;
enabling a user of said computing device to select and arrange at least some of said graphical elements on said display device (32) using said input device (38);
enabling said user to arrange graphical links between the selected graphical elements, wherein said selected graphical elements and said graphical links together form one or more graphical models of a process to be performed on data by said software application;
displaying in said IDE a 3D representation of said graphical model or models.

## Description

### FIELD OF THE INVENTION

The invention relates to an Integrated Development Environment, and related method of creating software applications.

### BACKGROUND OF THE INVENTION

The present specification describes features which build on the applicant's earlier Microgen Aptitude products. For example features of Microgen Aptitude V3.00 are described in the applicant's earlier European Patent Application No. 10196007.8 (Publication No. 2,354,925) and a number of other applications. Microgen Aptitude V3.00 is a development of Microgen's earlier Aptitude product which is described in US Patent Application No 11/341,156 (Publication No. US-2006-0247805-A1) and corresponding European Patent Application No 06100913.0 (Publication No. 1,686,466). It should be understood that the invention and the embodiments described below may incorporate features of any earlier Microgen Aptitude product, and any of the features described in the applications mentioned above.

Aptitude is a program with a graphical interface which allows users to create complex applications without knowledge of traditional programming languages. Graphical elements, also referred to as icons, can be connected together using graphical links in order to create graphical models of processes and rules which are later converted into computer instructions. The graphical models can be complex or composite, as they may contain many graphical elements.

Conventionally, computer programs are written in a programming language such as Cobol, Pascal, C++ or Java. The programs so produced consist of a set of files containing "source code" which is simply text written using the lexicon and obeying the syntax of the language. The source code is then compiled or translated into machine code and executed. The development environment for producing, managing and compiling these programs is called an "IDE" or Integrated Development Environment; "Integrated" because it normally comprises a set of tools such as compilers, linkers, debuggers, etc.

The programs in the source code files often "call" each other forming links or dependencies between them. It should be noted that the source code files and their links do not represent the logical "structure" of the software as a particular functional component such as a business rule may be coded in a large number of files with multiple dependencies so there is no clear correspondence between a source code file and particular piece of functionality.

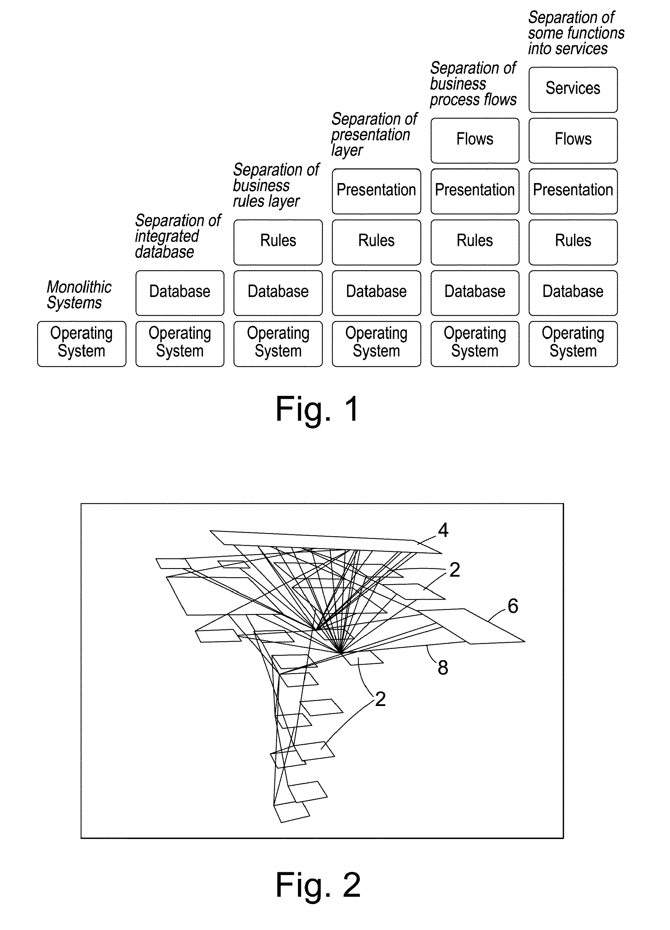

More recently, programs designed for commercial applications have been divided into layers where the layers comprise different "models" of the final program. Typically the models are defined using source code. Essentially each layer is a collection of one or more models of the same type. Such models may for example be concerned with Business Rules, Data Flow, Screen Presentation, Database, etc. as shown in Figure 1.

This architecture which is widely used by "Business Process Management Suites" (BPMS) has produced a radically different type of IDE which is able to cope with multiple models and to integrate them into an executable program; the development tools for each model usually generate source code - most frequently Java - which is then combined with the code from the other layers to produce an executable program.

Microgen Aptitude falls into this class of product but has taken a radically different approach whereby no source code is generated or required; each layer has an associated "modelling tool" which allows the Business User to model the Rules (say) graphically. The graphical models that are produced are diagrams comprising graphical elements (icons), and may for example represent processes and rules used in the Aptitude software. The graphical models that are produced for each layer are then combined and translated into intermediate code or "p-code". Unlike source code, this is not human readable but is interpreted by an execution engine so automating the business model.

All IDE's have a "Viewer" where the user can see all the different components (traditionally source code files) of an application. There may be hundreds or thousands of source code files and the organisation of these in a manner which allows the structure of the project to be visible, is a considerable challenge. Most Viewers provide a folder or tree structure organisation of the project components and these work to some degree when the project consists of a homogeneous set of source code files; however, when a layered architecture is employed where each layer consists of a different set of models, these folder or tree structures fail to provide a means to organise the many models and layers effectively.

### SUMMARY OF THE INVENTION

The invention provides a method and Integrated Development Environment, IDE, as set out in the accompanying claims.

The invention may also be defined by the following numbered paragraphs:
1. A method of creating a software application using an integrated development environment, IDE, running on a computing device (30) having at least a processor (34), a memory (36), a display device (32) and an input device (38), said method comprising:
   retrieving from said memory (36) and providing on said display device (32) a number of graphical elements each representing at least one operation to be performed on data;
   enabling a user of said computing device to select and arrange at least some of said graphical elements on said display device (32) using said input device (38);
   enabling said user to arrange graphical links between the selected graphical elements, wherein said selected graphical elements and said graphical links together form one or more graphical models of a process to be performed on data by said software application;
   displaying in said IDE a 3D representation of said graphical model or models.
2. A method as defined in paragraph 1, which further comprises allowing said user to rotate said 3D representation in three dimensions so as to view said 3D representation from different angles.
3. A method as defined in paragraph 1 or 2 which further comprises:
   said user creating a plurality of said graphical models, said graphical models being of at least first and second types;
   said processor (34) automatically causing said graphical models to be displayed in said 3D representation in a number of different three dimensional layers, said layers comprising at least a first layer containing graphical models of said first type and a second layer containing graphical models of said second type.
4. A method as defined in paragraph 3, wherein said types of graphical models include any combination of the following:
   Business User Diagrams;
   Business Process Diagrams;
   Microflows;
   Control Flows;
   Business Rules;
   Application Processes;
   Application Forms;
   SQL Rules;
   SQL Procedures; and
   Enrichment Schemas and Data Schemas.
5. A method as defined in paragraph 3 or 4, which further comprises allowing said user to switch a layer, or any combination of layers, on or off, so that said layer or combination of layers is visible or not visible in said 3D representation.
6. A method as defined in any of paragraphs 3 to 5, in which the organisation of graphical models in one layer is automatically adjusted by said processor (34) in dependence on the organisation of graphical models in another layer.
7. A method as defined in any of paragraphs 3 to 6, wherein said processor (34) controls said 3D representation to show links between graphical models in different layers.
8. A method as defined in any one of paragraphs 3 to 7, wherein said layers have a top layer which contains a Business User Diagram.
9. A method as defined in any one of paragraphs 3 to 8, which further comprises allowing said user to adjust the spacing between any two layers in said 3D representation.
10. A method as defined in any preceding paragraph, which further comprises said processor (34) controlling said display device (32) to display moving symbols on said graphical links, said moving symbols indicating the direction of the relationship represented by a graphical link.
11. A method as defined in any preceding paragraph, which further comprises:
   allowing said user to create each graphical model in an editor which allows said user to edit the graphical model and which displays, in an editor view, the graphical elements and links of the graphical model to the user; and
   displaying each graphical model in said 3D representation as a scaled down view of the editor view of the graphical model.
12. A method as defined in any preceding paragraph, which further comprises:
   allowing said user to create each graphical model in an editor which allows said user to edit the graphical model and which displays, in an editor view, the graphical elements and links of the graphical model to the user; and
   allowing said user to zoom in on a particular graphical model, and after zooming in on the graphical model to a particular extent, automatically displaying the graphical model in the editor view.
13. A method as defined in any preceding paragraph, which further comprises:
   allowing said user to select a graphical model, and on selection of the graphical model automatically displaying other graphical models in reduced contrast.
14. A method as defined in any preceding paragraph, which further comprises:
   allowing said user to remove from said display in said 3D representation any collection of graphical models or links.
15. A method as defined in any preceding paragraph, which further comprises:
   allowing said user to replace any collection of graphical models in said 3D representation by a representation of a container.
16. A method as defined in paragraph 15, wherein any graphical links to or from graphical models replaced by said container are automatically redrawn in said 3D representation as graphical links to or from said container.
17. A method as defined in paragraph 15 or 16, which further comprises:
   allowing said user to include one container within another container in said 3D representation.
18. A method as defined in any preceding paragraph, which further comprises:
   displaying said 3D representation on said display device (32) in a 3D viewer; and
   displaying in a 2D viewer a 2D representation of said graphical models.
19. A method as defined in paragraph 18, which further comprises allowing said user to drag and drop graphical models from said 2D viewer to said 3D viewer.
20. A method as defined in any preceding paragraph, which further comprises allowing said user to record a plurality of views in said 3D representation.
21. A method as defined in paragraph 20, which further comprises allowing said user to associate each recorded view with a different button on said display device (32), so that a recorded view is displayed on said display device (32) when its associated button is activated by said user.
22. A method as defined in paragraph 20 or 21, which further comprises allowing said user to create an animated sequence of said recorded views.
23. A method as defined in any preceding paragraph, which further comprises allowing a user to automatically remove from said 3D representation any graphical models which are not directly dependent on a selected graphical model, or on which a selected graphical model is not directly dependent.
24. A method as defined in any preceding paragraph, which further comprises allowing said user to select any graphical model or set of graphical models, and then automatically remove from said 3D representation any graphical models which are not directly or indirectly dependent on the selected graphical model or models, or on which the selected graphical model or models are not directly or indirectly dependent.
25. A method as defined in any preceding paragraph, which further comprises automatically arranging close together in said 3D representation models which call each other.
26. A method as defined in any preceding paragraph, which further comprises automatically arranging close together in said 3D representation models which use the same data objects.
27. A method as defined in any preceding paragraph, which further comprises automatically grouping together in said 3D representation models which call the same lower level graphical models.
28. A method as defined in any preceding paragraph, which further comprises automatically grouping together in said 3D representation models which are called from the same higher level models.
29. A method as defined in any preceding paragraph, which further comprises automatically grouping together in said 3D representation models which share related names.
30. A method as defined in any preceding paragraph, which further comprises compiling, at said processor (34), said software application.
31. An integrated development environment, IDE, for creating a software application, said IDE comprising:
   a number of graphical elements which can be arranged and interconnected by links within said IDE to form a number of graphical models of different types,
   a 3D viewer arranged to provide a 3D representation of said graphical models and said links.

### BRIEF DESCRIPTION OF THE FIGURES

Figure 1 shows a layered architecture used for example in Business Process Management Suites;
Figure 2 shows a screenshot of a view in accordance with the invention;
Figure 3 shows an example of models linked by lines provided with moving symbols showing the direction of the relationship;
Figures 4 and 5 show two different views of the same project;
Figure 6 shows a zoomed-in view of a model in Figure 5;
Figure 7 shows the model of Figure 6 in its associated editor;
Figure 8 shows a chosen model, with all other models displayed in reduced contrast;
Figure 9 shows a complete project;
Figure 10 shows the project of Figure 9 with only the rules and data flow models present and the connections removed;
Figure 11 shows a large complex project;
Figure 12 shows the project of Figure 11 with a number of models black boxed;
Figures 13 to 15 show the simultaneous presentation of 2D and 3D viewers;
Figure 14 shows a model and only those models on which it is directly dependent; Figure 15 shows the addition in the 3D viewer of models selected in the 2D viewer;
Figure 16 shows how the user may record individual views in the 3D viewer, and assign each view to a numbered button;
Figures 17 to 26 show graphical elements used in different models for use with the invention; and
Figure 27 shows a computing device 30, which may for example be a personal computer (PC), suitable for use with the IDE.

### DESCRIPTION OF PREFERRED EMBODIMENTS

Modern Business Process Management Suites segment software applications into different layers such as Business Rules, Data Flows and Presentation Layers. Each layer contains a number of models of the same type.

Each model is not source code but is rather a graphic "model" of part of the business process. Such an architecture requires a different type of Integrated Development Environment (IDE) which, rather than managing multiple files of source code, is able to organise and display the different layers and the many different models that exist for each layer. Unlike source code, the different models of each layer correspond to functional or logical components of the total application and each one may have a functional link with other models.

It is important that the developer is able to see the structure of the whole application and standard IDE Viewers cannot achieve this. They become very clumsy and inadequate when the application is complex containing hundreds or thousands of models spread across different layers such that it becomes impossible to see the project as a whole and to manage its complexity. The result is errors within the application and increased cost and duration of the development program and subsequent testing.

We describe herein features of a product which we refer to as Microgen Aptitude 3D, which seeks to remedy this deficiency by displaying the layers and their models as a 3D representation.

Figure 2 shows a screenshot from Aptitude 3D, in which different models 2 are shown as a 3D representation which can be rotated by the viewer, so as to be viewable from any angle. Within 3D space, the different layers are displayed using the vertical axis and the models are organised using the two horizontal axes. This architecture makes possible a number of features all designed to help with the management of complexity and to provide the user with clear and useful views of the application. In this way the layers of the architecture are shown as layers of the 3D representation. In Figure 2 for example the top layer 4 is formed from a single Business User Diagram (described below). The layer 6 below this is formed from a collection of eight models 2 of the same type, and subsequent layers are arranged below this.

Aptitude 3D is suitable for displaying projects where a layered architecture of application models is employed. If we consider the z axis to be a vertical axis and the x and y axes to be perpendicular horizontal axes then Aptitude 3D displays a project such that each model type is shown in a different layer at a different height on the z axis and the different models within each layer are organised in planes parallel to the "x" and "y" axes.

We now describe a number of different models, together with their constituent graphical elements.

The models which will be described here include:
Business User Diagrams
Business Process Diagrams
Microflows
Control Flows
Business Rules
Application Processes
Application Forms
SQL Rules
SQL Procedures
Enrichment Schemas and Data Schemas

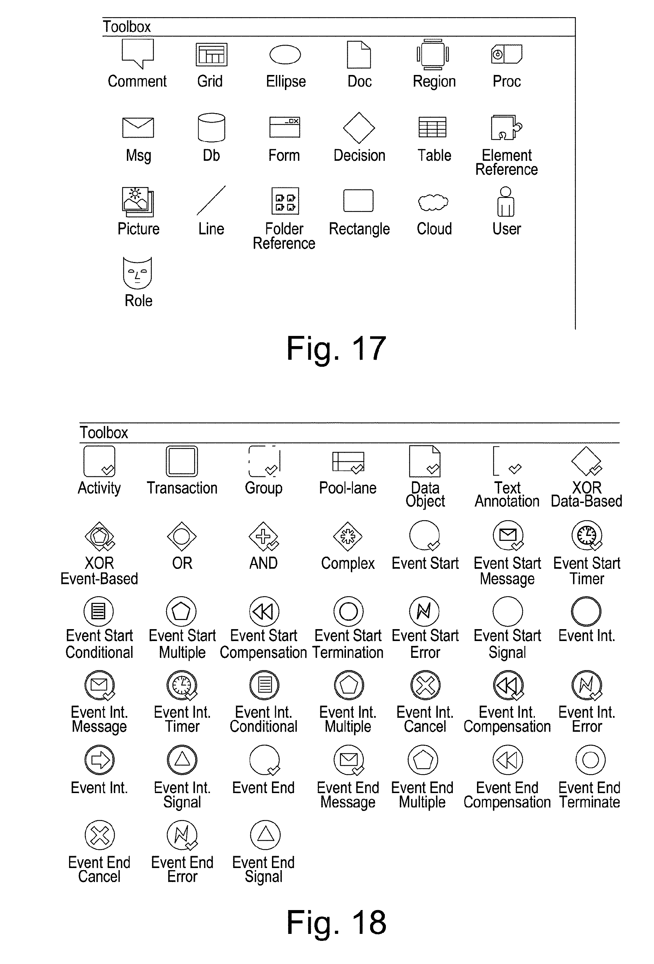

The graphical elements used in these models are shown in Figures 17 to 26, which will now be described.

Figure 17 shows some of the graphical elements which are available for use in Business User Diagrams. This is a high level model which is produced by the Business User. It has no syntax and the elements are concerned with drawing rather than being specialised elements.

Figure 18 shows some of the graphical elements which are available for use in Business Process Diagrams. This is written by an IT person in collaboration with the business. It conforms to an industry standard language called "Business Process Modelling Notation" or BPMN.

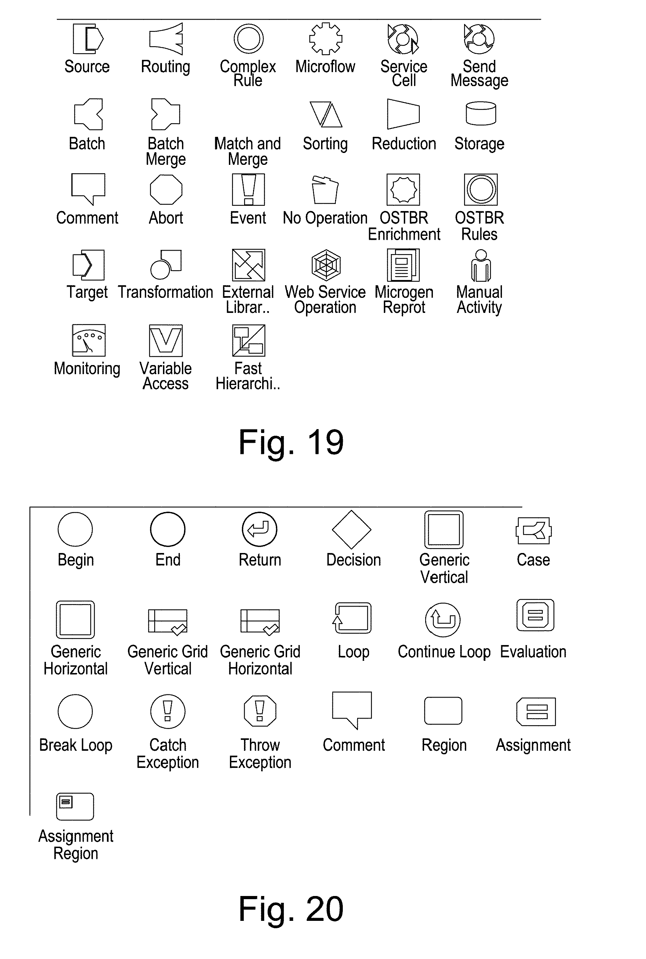

Figure 19 shows some of the graphical elements which are available for use in Microflows (data flows): These are proprietary and designed to model data flow

Figure 20 shows some of the graphical elements which are available for use in Control Flows: These are proprietary and designed to model control flow

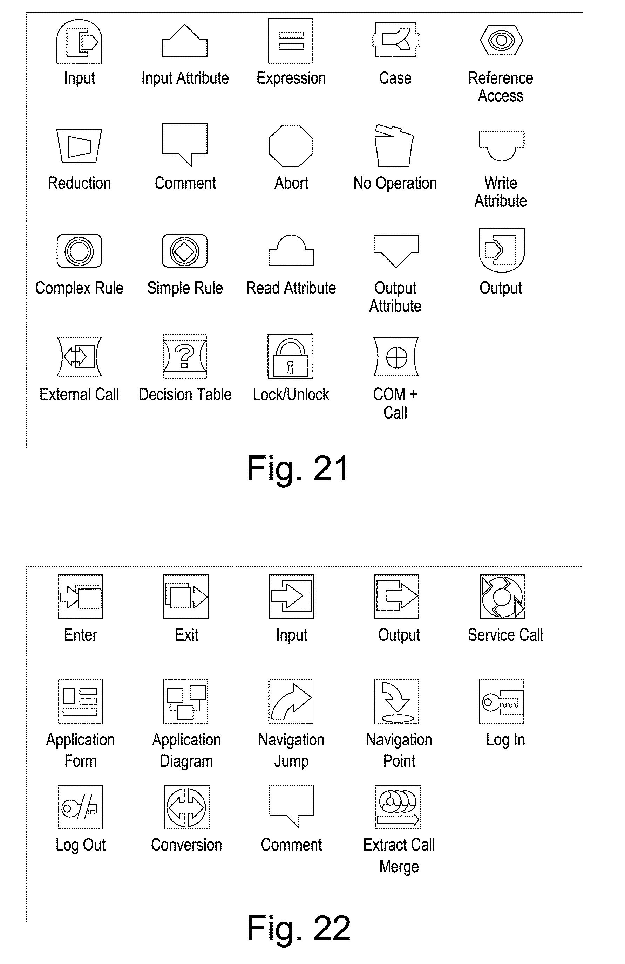

Figure 21 shows some of the graphical elements which are available for use in Business Rules. This is proprietary and the elements have been chosen to allow both simple and very complex rules to be modelled.

Figure 22 shows some of the graphical elements which are available for use in Application Processes. These are proprietary and used to model the user interface of the application (including e.g. the navigation through the screens (forms) of the navigation which may be conditional, the menu system structure, the operations performed on user actions, the login and logout, the application security i.e. privileges granted for users to perform some actions etc.)

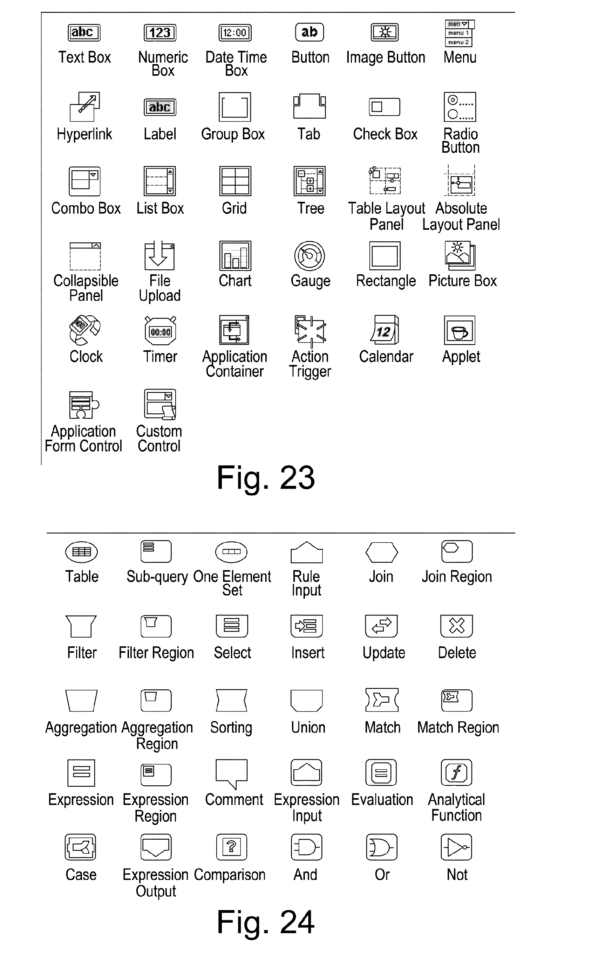

Figure 23 shows some of the graphical elements which are available for use in Application Forms. These are used to model the forms (screens) of the application - their look and contents i.e. the controls like edit boxes, grids or buttons to be used by application's users. They model the functionality of the forms.

Figure 24 shows some of the graphical elements which are available for use in SQL Rules. These elements make it possible to model the business rules for the subsequent execution in the databases using SQL language (proprietary)

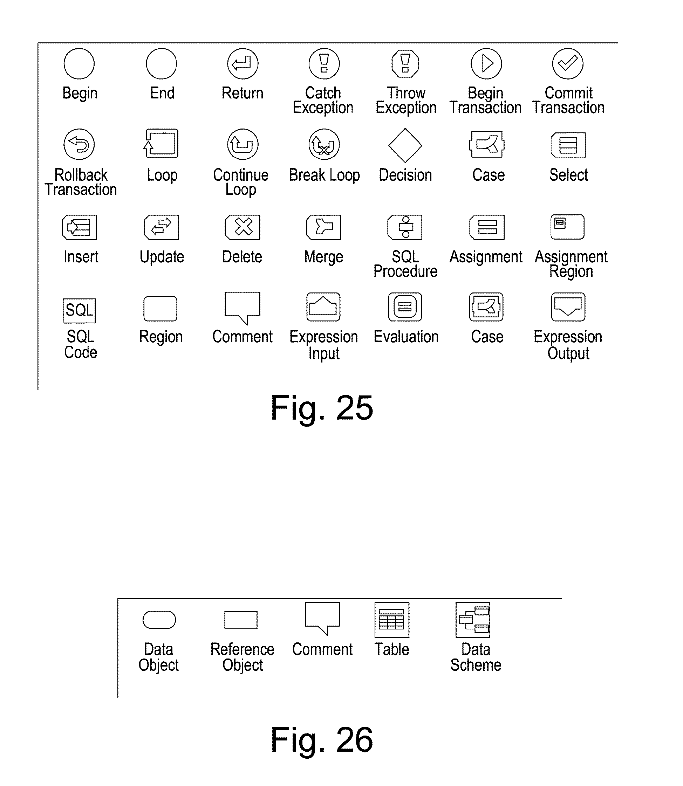

Figure 25 shows some of the graphical elements which are available for use in SQL Procedures. These are used for modelling the business procedures for the subsequent execution in the databases using SQL procedures (proprietary)

Figure 26 shows some of the graphical elements which are available for use in Enrichment Schemas and Data Schemas - modelling the relationships between various data objects, reference objects and tables used in an Aptitude project

Lower level models include:
- External Data Formats (EDF) which model the data as it is held in an external system
- Data Objects (DO) which model the data held within Aptitude
- Mappings model the relationship between the EDF's and the DO's
- Enrichment Schema produce a "view" of the database by building a model of tables and their relationships.
- Devices provide a model of external systems which supply or receive data, e.g. a database.

These models do not employ a graphic model using a blank sheet and a tool box like the higher level models. Rather, they use a dialogue driven editor which constructs a much more structured and constrained model as befits their nature and function.

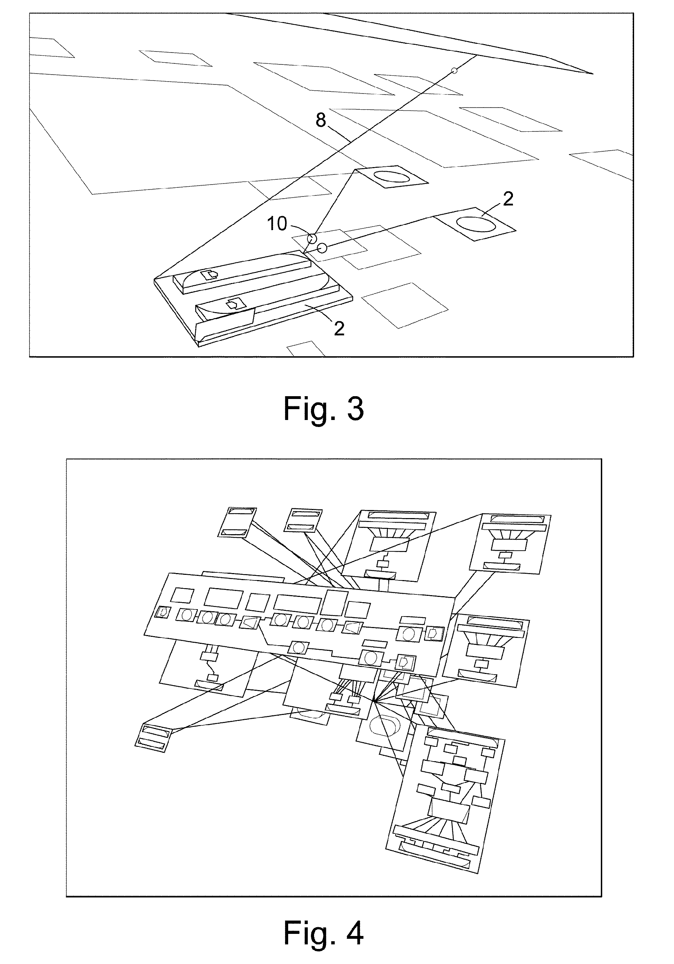

As shown for example in Figures 2 and 3, lines 8 are displayed between various models 2. The lines linking the different models show the dependencies between them. Note that these may correspond to "calls" from one model to another and may include lines 8 containing animated balls 10. The balls 10 move along the lines 8, and the direction in which the balls 10 travel indicates the direction of the dependency. An example is shown in Figure 3.

Aptitude 3D may automatically generate and draw some lines representing links between models, and in addition users can add links manually to show some additional or special relationships between the models. Links can be drawn between elements which are positioned any number of layers apart. In addition, many links can originate from a single model.

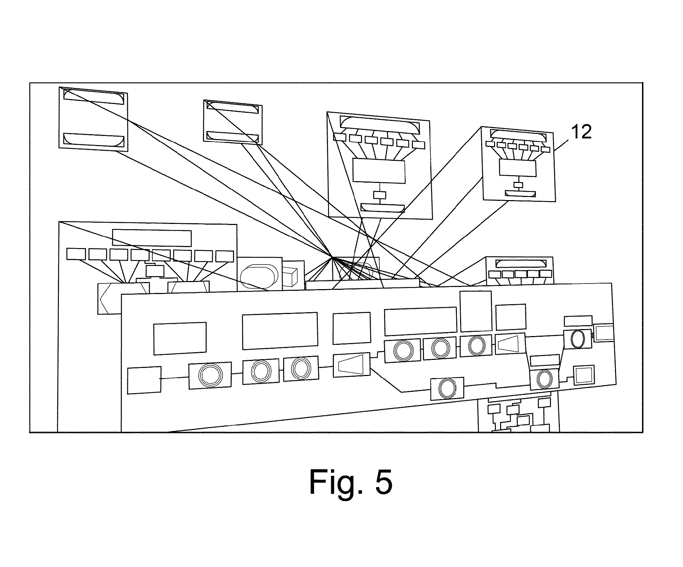

By using a computer mouse, for example in combination with the "Shift", "Ctrl" and "Alt" keys, it is possible to pan and zoom around the picture and to rotate it around any chosen axis. Figures 4 and 5 show two different views of the same project.

In addition the spacing between the different layers can be increased or decreased using a slider control, which may again be controlled by a computer mouse.

A user can create additional layers or sub-layers to better organize the 3D View of the project. If needed, models 2 can be moved between layers manually.

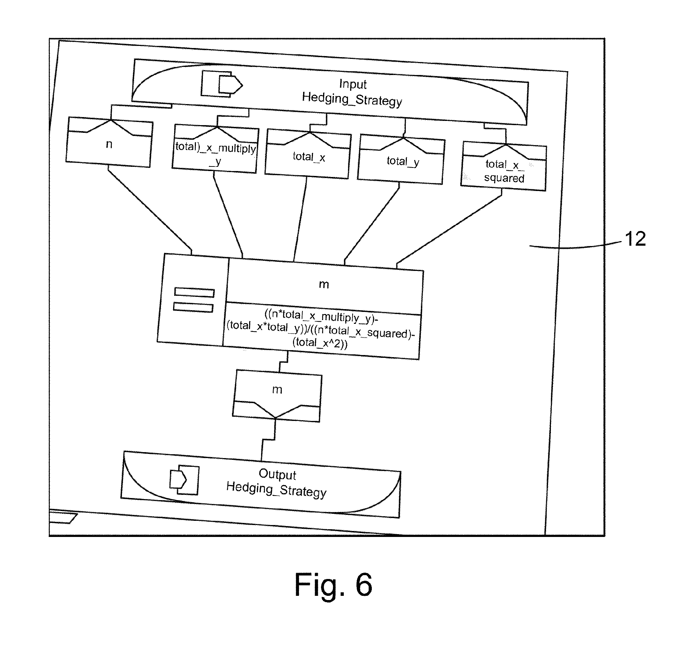

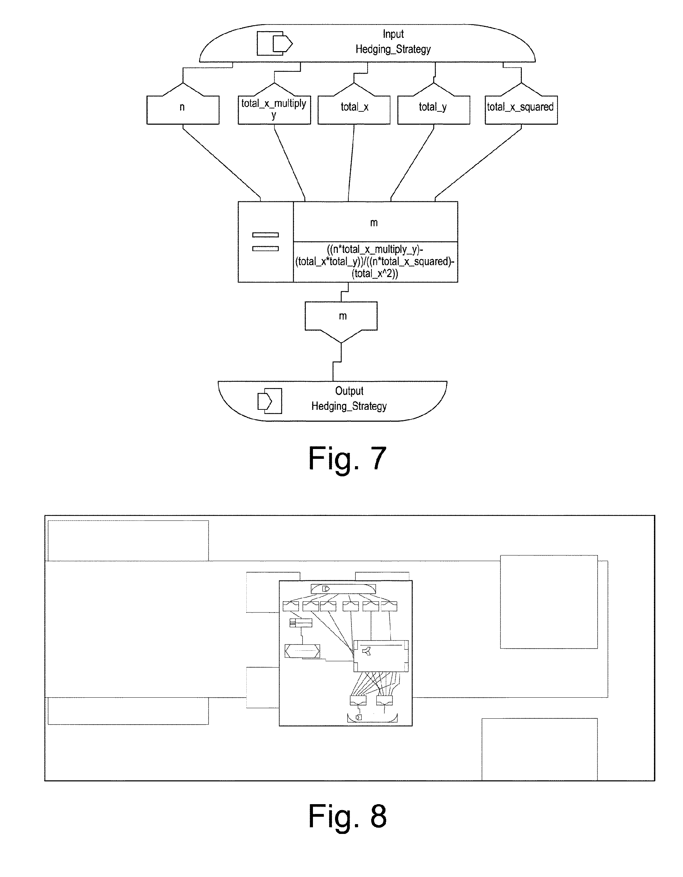

The different models are not shown as "icons" within the viewer but as scaled copies of the graphical models that would be seen when creating or editing the model using the IDE editor. As an example, a model 12 in Figure 5 is chosen, and a zoomed-in view of the model 12 in the viewer is shown in Figure 6. The corresponding view of the model 12 within its associated editor is shown in Figure 7.

Movement between the editors and viewers is simple. Clicking on a model with the Ctrl key, for example, held down moves to the editor for that model and on closing the editor after making changes, the user is returned to the 3D Viewer where the changes are visible. Double clicking on any model causes it to be highlighted and all other models to be shown with much reduced contrast as shown in Figure 8.

Large projects may have many hundreds of elements and even the 3D view provided by Aptitude 3D can appear complex. The invention contains a number of features designed to manage this complexity.

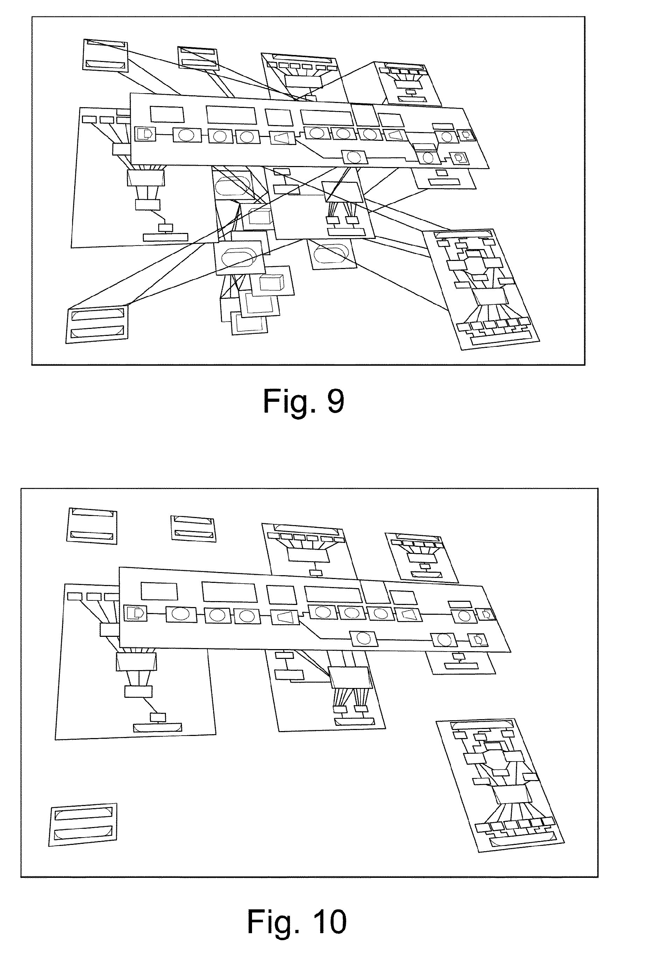

The first is the facility to turn on and off the connections and particular layers or types of model. For example, a user might only want to see the rules and process flows and hide or remove the lower level models concerned with database connectivity. Figure 9 shows the complete project while Figure 10 shows the same project with only the rules and data flow models present and the connections removed.

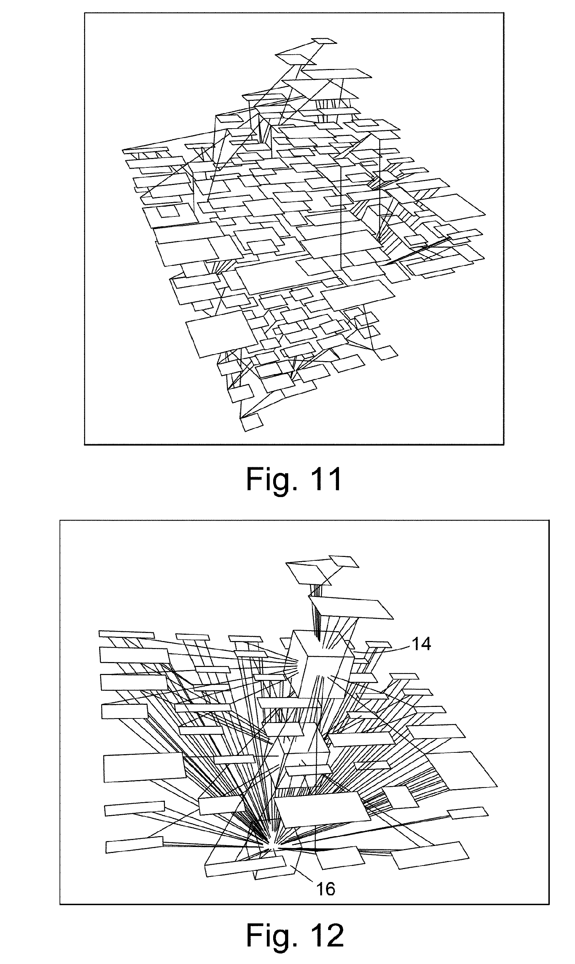

Another method by which complexity of the diagram can be reduced is to "black box" sets of models or elements in which the user is not interested. Unlike the previous method, this is not restricted to a particular layer. Figure 11 shows a large complex project and Figure 12 shows the same project with a number of models or elements black boxed.

In this instance three black boxes have been used. In this example the upper "black box" 14 is yellow and contains diagrams and forms relating to web applications, the middle box is red and contains graphical rules, and the lower box 16 is blue and contains devices and external data formats.

Any set of elements (possibly of different types) from either one or multiple layers can be selected and "Black Boxed". Black boxes can be named, have a description and assigned other properties like colours, attachments etc. "Black boxes" may contain other black boxes.

To black box a set of models or elements it is only necessary to select the boxes and then choose the option "black box" from the right mouse click menu.

By the term "black box" we include placing models or elements within a graphical symbol or a graphical representation of a container, of any shape and/or colour. This need not necessarily be either black or a box.

In addition to the 3D viewer described above, Aptitude 3D also retains a standard 2D Viewer which provides a tree and folder view of the project. The 2D viewer can be more efficient for certain types of operation such as editing all the models of a particular type.

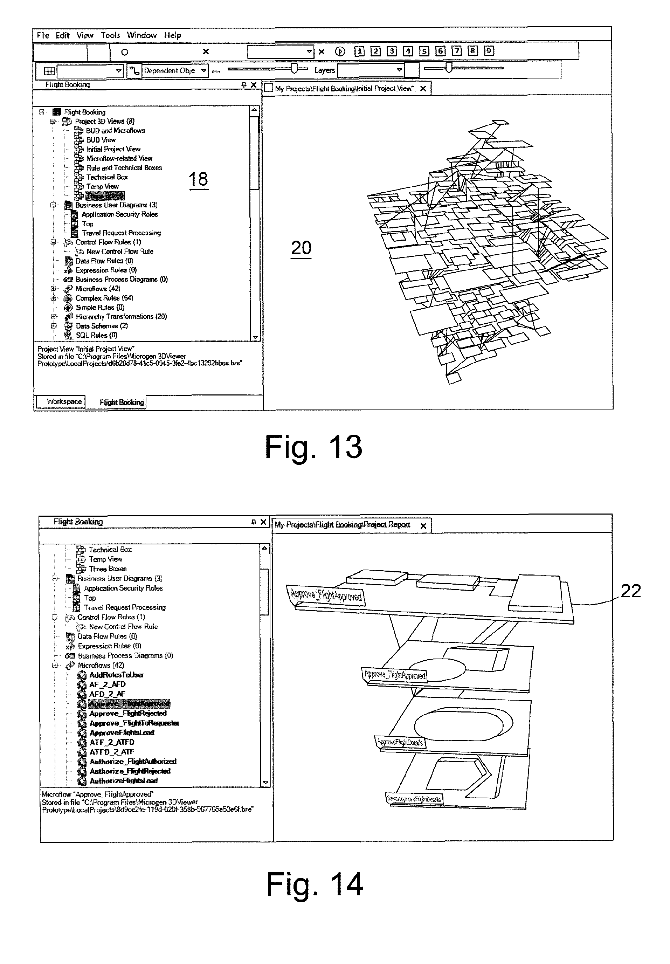

Furthermore, some very useful functionality can be achieved by the interworking of the two viewers. The simultaneous presentation of the two viewers is shown in Figures 13 to 15 and the user can switch between the two views with a single key-stroke. Figures 13 to 15 show both viewers presented in a single screen.

The co-existence of the two viewers allows the creation and storage of bespoke 3D views of the project. Models can be selected in the 2D viewer 18 and then shown in 3D in the 3D Viewer 20. This is shown in Figure 14 where a Microflow model "Approve_FlightApproved" 22 has been selected in the 2D Viewer and then displayed in the adjacent 3D Viewer. It is possible to choose to display a model showing:
(a) It's direct dependencies
(b) Both direct and indirect dependencies
(c) Where it is used within the project

In Figure 14 the model 22 and only its direct dependencies are displayed.

This ability to display both direct and indirect dependencies and also show where a model is used within a project are very important aids to the management of complexity and to user productivity. When thinking how to change a model, it is important that all the dependent models are known and understood but a 2D viewer alone cannot provide this facility except in a clumsy fashion as it fails to show the relationships between models. The user may only be interested in the direct dependencies but often wants to see the indirect ones if the influence of the model is pervasive.

The ability to show where a particular model is used is also important. Most 2D IDE's achieve this by scanning the elements (most of them do not deal with models) and then producing a list of the places where a particular element is used. The programmer then edits every item on the list to ensure the changes to the selected element are propagated correctly throughout the project. Microgen Aptitude 3D allows all the affected models to be displayed within the 3D viewer from where they can be edited directly.

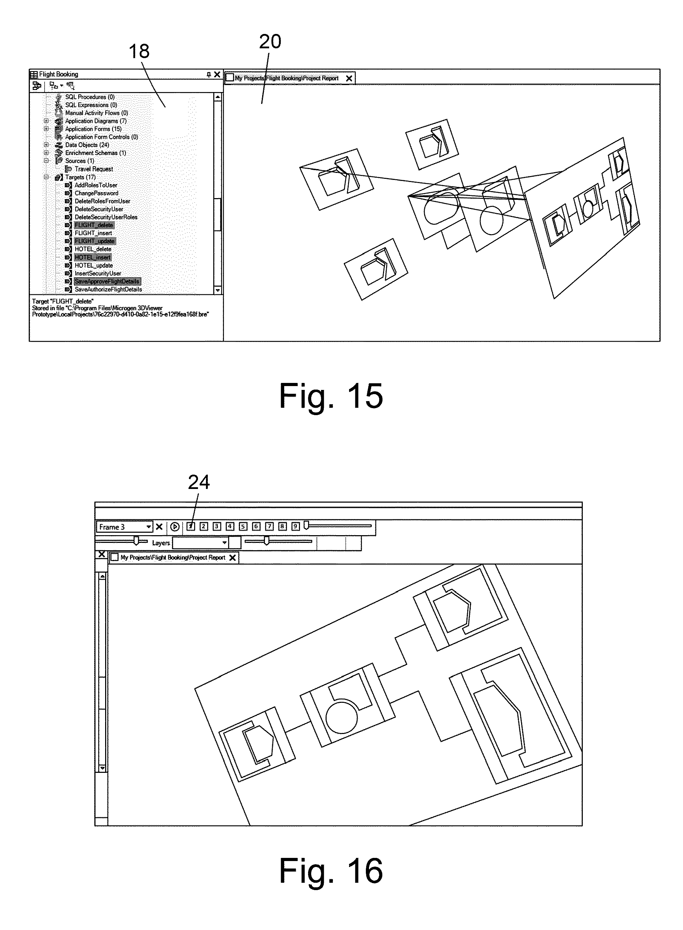

To produce a completely bespoke 3D view, models can be selected within the 2D view and then dragged and dropped onto the 3D Viewer. Figure 15 shows the same model as Figure 14 but with 4 additional models added. The additional models were selected in the 2D viewer 18 as shown in the left panel and then dragged and dropped onto the 3D viewer 20 where they have been placed in the correct layer for their type and any relationships with the other models displayed as connecting lines.

A bespoke 3D view can be also created from the existing 3D view, after selecting a subset of its models.

Within a layer, the models may be moved and organised through use of the mouse so as to arrange them to best suit the user's needs. This is an important aid to clarity as models can be functionally grouped so better revealing the structure of the project. There are a number of criteria the user can choose to automatically group models within a layer. They include any combination of the following:
1) Place models which call each other close together
2) Place models which use the same data objects close together
3) Models which call the same lower level models should be grouped
4) Models which are called from the same higher level models should be grouped
5) Use the name of the models to determine grouping

Note that these criteria are not mutually exclusive although conflicts can arise and the user is then asked to choose between the alternatives. These criteria are in addition to the facility for the user to manually move objects around.

Within a layer, the models can be manually grouped using containers of different shapes (user can e.g. drag a number of chosen models into a rectangular container). The container may have links defining its relationships to other containers or models. When the container is moved as a whole, all the elements it contains are also moved. Containers may have properties assigned like shapes, borders, names, descriptions, tags, colours and other visual signs, backgrounds. Containers may be visually collapsed into a small symbol and then expanded again showing all elements within them. Containers may contain containers.

A user can manually create additional layers, and can manually add and remove links between the graphical models, either in the same layer or different layers.

Rather than allowing Aptitude 3D to automatically create the 3D representation, the user can choose to create a bespoke 3D view. This can be done for example by selecting graphical models from another 3D view.

It is also possible for a user to manually move graphical models on a layer, or to manually group graphical models on a layer. A user can also use 2D containers (on layers) to organize groups of graphical models, and can link the containers with other containers and graphical models.

Users will often work with multiple views of a project and the Aptitude 3D includes the facility to store a particular view and assign it to a button 24 on the 3D Viewer tool bar. In this way the user can effectively record a series of views, and assign each view to one of the numbered buttons 24. The user can then switch to a particular view simply by clicking the corresponding button 24 of the tool bar. This is shown in Figure 16.

The first three numbered buttons 24 in the toolbar are highlighted showing that a particular view has been assigned to them.

A further facility which helps produce presentations of a project is that these views or "frames" can be animated and played back as a sequence. In this case, the views corresponding to the numbered buttons 16 are played back one after the other. This is useful for building presentations of the project particularly when it is required to illustrate data flows or the flow of control through a project. The animation sequence may contain any number of frames, not necessarily assigned to buttons 24.

Aptitude 3D may be provided with a facility to add additional information to the graphical models. Additional attributes that may be textual or graphical may be added to a graphical model and may be visible in the 3D diagram. For example a graphical model may be made a different colour to show that it had been implemented by programmers. A "percentage complete" figure may be added to a graphical model to show development progress.

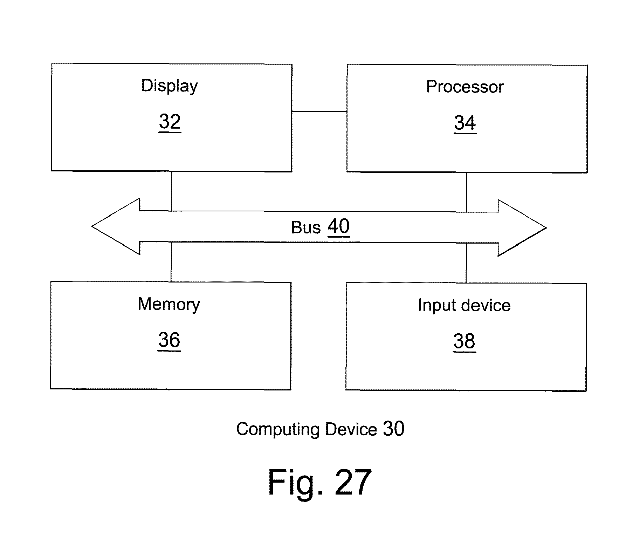

Figure 27 shows a computing device 30, which may for example be a personal computer (PC), which is suitable for running the Aptitude 3D software. The computing device 30 comprises a display 32 for displaying information to the developer, a processor 34, a memory 36 and an input device 38 (for example a mouse and/or keyboard) for allowing the developer to input information. These elements are connected by a bus 40 via which information is exchanged between the components.

The 2D and 3D viewers of the Microgen Aptitude 3D Integrated Development Environment described herein may be used to create applications for use in any field, including for example engineering, process control, and business processes, and any field of science or technology.

Each feature disclosed or illustrated in the present specification may be incorporated in the invention, whether alone or in any appropriate combination with any other feature disclosed or illustrated herein.

## Claims

1. A method of creating a software application using an integrated development environment, IDE, running on a computing device (30) having at least a processor (34), a memory (36), a display device (32) and an input device (38), said method comprising:
retrieving from said memory (36) and providing on said display device (32) a number of graphical elements each representing at least one operation to be performed on data;
enabling a user of said computing device to select and arrange at least some of said graphical elements on said display device (32) using said input device (38);
enabling said user to arrange graphical links between the selected graphical elements, wherein said selected graphical elements and said graphical links together form one or more graphical models of a process to be performed on data by said software application;
displaying in said IDE a 3D representation of said graphical model or models.

2. A method as claimed in claim 1, which further comprises:
said user creating a plurality of said graphical models, said graphical models being of at least first and second types;
said processor (34) automatically causing said graphical models to be displayed in said 3D representation in a number of different three dimensional layers, said layers comprising at least a first layer containing graphical models of said first type and a second layer containing graphical models of said second type.

3. A method as claimed in claim 2, wherein said types of graphical models include any combination of the following:
Business User Diagrams;
Business Process Diagrams;
Microflows;
Control Flows;
Business Rules;
Application Processes;
Application Forms;
SQL Rules;
SQL Procedures; and
Enrichment Schemas and Data Schemas.

4. A method as claimed in claim 2 or 3, in which the organisation of graphical models in one layer is automatically adjusted by said processor (34) in dependence on the organisation of graphical models in another layer.

5. A method as claimed in any one of claims 2 to 4, wherein said processor (34) controls said 3D representation to show links between graphical models in different layers.

6. A method as claimed in any preceding claim, which further comprises said processor (34) controlling said display device (32) to display moving symbols on said graphical links, said moving symbols indicating the direction of the relationship represented by a graphical link.

7. A method as claimed in any preceding claim, which further comprises:
allowing said user to create each graphical model in an editor which allows said user to edit the graphical model and which displays, in an editor view, the graphical elements and links of the graphical model to the user; and
displaying each graphical model in said 3D representation as a scaled down view of the editor view of the graphical model.

8. A method as claimed in any preceding claim, which further comprises:
allowing said user to replace any collection of graphical models in said 3D representation by a representation of a container.

9. A method as claimed in claim 8, wherein any graphical links to or from graphical models replaced by said container are automatically redrawn in said 3D representation as graphical links to or from said container.

10. A method as claimed in any preceding claim, which further comprises:
displaying said 3D representation on said display device (32) in a 3D viewer; and
displaying in a 2D viewer a 2D representation of said graphical models.

11. A method as claimed in claim 10, which further comprises allowing said user to drag and drop graphical models from said 2D viewer to said 3D viewer.

12. A method as claimed in any preceding claim, which further comprises allowing said user to record a plurality of views in said 3D representation.

13. A method as claimed in any preceding claim, which further comprises allowing said user to select any graphical model or set of graphical models, and then automatically remove from said 3D representation any graphical models which are not directly or indirectly dependent on the selected graphical model or models, or on which the selected graphical model or models are not directly or indirectly dependent.

14. A method as claimed in any preceding claim, which further comprises automatically arranging close together in said 3D representation models which call each other.

15. A method as claimed in any preceding claim, which further comprises automatically arranging close together in said 3D representation models which use the same data objects.
